# EUROPÄISCHE PATENTSCHRIFT

(11) **EP 3 112 812 B1**
(45) Veröffentlichungstag und Bekanntmachung des Hinweises auf die Patenterteilung: **25.10.2017**
(21) Anmeldenummer: 15174815.9
(22) Anmeldetag: 01.07.2015
(51) Int. Cl.: G01C 22/02, B62D 55/00

(54) **VORRICHTUNG UND VERFAHREN ZUR WEGSTRECKENMESSUNG AN EINER BAUMASCHINE MIT EINEM RAUPENKETTENANTRIEB UND BAUMASCHINE**
DEVICE AND METHOD FOR MEASURING DISTANCE ON A CONSTRUCTION MACHINE HAVING A TRACKS DRIVE AND CONSTRUCTION MACHINE
DISPOSITIF ET PROCEDE DE MESURE DE LA DISTANCE PARCOURUE SUR UN ENGIN EQUIPE DE CHENILLES ET ENGIN

(43) Veröffentlichungstag der Anmeldung: 04.01.2017
(60) Teilanmeldung: 17186900.1
(73) Patentinhaber: MOBA Mobile Automation AG, 65555 Limburg (DE)
(72) Erfinder: WATERMANN, Marcus, 65555 Limburg (DE); BECHER, Dominik, 65555 Limburg (DE)
(74) Vertreter: Zimmermann, Tankred Klaus

(56) Entgegenhaltungen:
- EP-A1- 0 199 829
- EP-A1- 0 388 819

## Beschreibung

Die vorliegende Erfindung bezieht sich auf das Gebiet von Baumaschinen mit Raupenkettenantrieb (Kettenlaufwerken), wie beispielsweise Straßenfertiger oder Straßenfräsen, insbesondere auf eine Vorrichtung und auf ein Verfahren zur Wegstreckenmessung an einer Baumaschine mit einem Raupenkettenantrieb sowie auf eine Baumaschine mit einer solchen Vorrichtung.

Im Stand der Technik sind verschiedene Ansätze bekannt, um eine Wegstrecke zu messen, die durch eine Baumaschine zurückgelegt wurde. So offenbart beispielsweise die EP 0 388 819 A1 eine Wegmesseinrichtung für einen Straßenfertiger mit einer Einbaubohle, wobei die Wegmesseinrichtung ein innerhalb der Arbeitsbreite der Einbaubohle mitlaufendes Messrad umfasst. Ein solches Messrad ist nachteilhaft, da ein zusätzliches, sich bewegendes Element an der Baumaschine bereitgestellt werden muss, welches insbesondere beim Einsatz an einem Straßenfertiger durch das zu verbauende Material verschmutzt wird und dadurch nicht mehr reibungslos mitläuft, so dass die gemessene Wegstrecke verfälscht wird.

Die EP 1 557 493 A2 beschreibt ein Verfahren zum Betreiben eines Straßenfertigers, wobei eine Position des Straßenfertigers entweder zu Beginn oder zum Ende eines Einbauvorgangs oder auch kontinuierlich über ein Navigationssystem bestimmt wird. Aus den Positionen wird eine tatsächlich eingebaute Wegstrecke unter Berücksichtigung des Wegverlaufs, wie beispielsweise Kurven oder Steigungen, bestimmt und angezeigt. Nachteilig an diesem Verfahren ist, dass die Wegstreckenmessung einzig und allein auf einem satellitengestützten Navigationssystem, beispielsweise dem GPS-System, basiert und daher in der Praxis fehleranfällig ist. Ein zuverlässiges GPS-Signal ist bedingt durch Wetter- und Umwelteinflüsse sowie bei Durchfahrten des Straßenfertigers unter Brücken oder in Tunneln nicht immer gewährleistet, wodurch eine Positionsbestimmung des Straßenfertigers und damit die Feststellung der zurückgelegten Wegstrecke und der tatsächlich eingebauten Wegstrecke ungenau ist. Weiter ist von Nachteil, dass ein Verlauf der einzubauenden Straße im Vorfeld bekannt sein muss, da ansonsten eine genaue Wegstreckenberechnung nicht erfolgen kann.

Die WO 2012/168186 A1 beschreibt ein Verfahren zum Bestimmen einer von einer Baumaschine oder einer Abbaumaschine mit einer Fräswalze gefrästen Fläche. Mittels einer Positionsbestimmungseinrichtung und einem GNSS-Empfänger (GNSS = Globales Navigationssatellitensystem) oder mittels einer Totalstation und eines auf der Maschine angeordneten Prismas wird die Position der Maschine kontinuierlich ermittelt. Zusammen mit der Breite der Fräswalze werden Teilflächen berechnet und zu einer Gesamtfläche aufsummiert. Aus dieser Gesamtfläche werden sich überlappende Teilflächen, d.h. mehrfach bearbeitete Flächenteile, wieder abgezogen, um eine tatsächliche gefräste Fläche zu erhalten. Die Information, ob die Frästrommel eingeschaltet ist oder nicht, muss dabei entweder von dem Bediener manuell eingegeben werden oder ist von der Maschinensteuerung abrufbar. Bei Empfangsstörungen des GNSS-Signals werden Ersatzdaten für fehlende oder fehlerhafte Positionsdaten berechnet, welche diese ergänzen bzw. ersetzen. Dabei werden die Ersatzdaten entweder aus dem bisherigen oder weiteren Wegstreckenverlauf oder aus den Vorschub- und Lenkwinkeldaten der Maschine gewonnen. Nachteilig an dieser Vorgehensweise ist, dass die Positionsbestimmungseinrichtung immer Zugriff auf die Maschinenparameter benötigt und/oder den Wegstreckenverlauf der Maschine kennen muss, so dass im Fall von Empfangsstörungen des GNSS-Signals eine Berechnung von Ersatzdaten durchgeführt werden kann. Weiterhin nachteilig ist, dass für eine Information, ob die Maschine während einer Bewegung arbeitet oder nicht, d.h. ob z.B. eine Frästrommel eingeschaltet ist oder nicht, ebenfalls ein Zugriff auf Maschinenparameter benötigt wird. Alternativ kann diese Information auch von einem Bediener manuell eingegeben werden, was jedoch dahingehend nachteilhaft ist, dass es zu Fehlberechnungen kommt, wenn diese Eingabe nicht durchgeführt wird.

Die GB 2 255 640 A offenbart einen Straßenfertiger mit einem im Bereich des Vorderrads angeordneten, berührungslosen Näherungssensor und mit einer in einem Erfassungsbereich des Näherungssensors liegenden, in Querrichtung des Straßenfertigers hinter dem Vorderrad angeordneten Speiche, welche an der Achse des Vorderrads befestigt ist und sich bei einer Bewegung des Straßenfertigers gleichmäßig mit dem Vorderrad dreht. Bei einer Bewegung des Straßenfertigers entstehen durch die Drehbewegung der Speiche am Näherungssensor Impulse, anhand denen ein zurückgelegter Weg des Straßenfertigers gemessen werden kann. Des Weiteren befindet sich vor der Verteilerschnecke ein Schaltelement mit einem nach unten gerichteten und in das noch zu verarbeitende Material hineinragenden Hebel. Mittels dieser Schaltvorrichtung kann festgestellt werden, ob der Straßenfertiger eine Vorwärtsbewegung ausführt oder nicht, und infolgedessen eine Wegstreckenmessung aktiviert bzw. deaktiviert wird. Nachteilig an diesem System ist, dass zum einen die Schaltvorrichtung im Bereich vor der Verteilerschnecke eine mechanische Vorrichtung und demnach verschleißanfällig ist, und zum anderen ist der im Bereich des Vorderrads angeordnete Sensor nachteilhaft, da die Sensoranordnung sehr aufwändig hinter dem Vorderrad installiert werden muss und somit im Reparaturfall schwer zugänglich ist und nur mit hohem Aufwand ausgetauscht werden kann. Dies führt zu einem längeren und unplanmäßigen Stillstand des Straßenfertigers. Auch ist die Sensoranordnung aufgrund der Montageposition bei einer Verschmutzung schwer zu reinigen. Ein weiterer Nachteil dieses Systems besteht darin, dass bei einem Defekt von bereits einem der beiden Sensoren bzw. einer der beiden Vorrichtungen, d.h. entweder der Schaltvorrichtung vor der Verteilerschnecke oder der Sensoranordnung hinter dem Vorderrad, eine Wegstreckenmessung bzw. -berechnung so lange nicht mehr möglich ist oder so lange fehlerbehaftet ist, bis die defekte Vorrichtung repariert wurde.

Die EP 0 199 829 A1 betrifft einen Ansatz zur Wegstreckenmessung für landwirtschaftlich genutzte Fahrzeuge. Hierfür ist ein ein Drehorgan umlaufendes und dieses antreibendes Band, Kette oder dergleichen ist vorgesehen, wobei sich das Drehorgan in einem Abstand über dem Boden befindet, während das untere Trum des Bandes auf dem Boden aufliegt. Dieses Band läuft wie bei einem Raupenfahrzeug über den Boden, allerdings mit dem Unterschied, dass das Band lose auf dem Boden aufliegt, da das Drehorgan selbst nicht auf das untere Trum des Bandes drückt. Ein Glied bzw. eine Stelle des Bandes haftet für ein vorgegebenes Wegstreckenintervall auf dem Boden, bis an dem in Fahrtrichtung hinteren Ende des umlaufenden Bandes diese Stelle nach oben unter Lösung der Verbindung zum Boden und zurück über das Drehorgan hinwegläuft. Beim Lösen dieser Stelle des Bandes vom Boden kommt aber gleichzeitig eine andere Stelle des umlaufenden Bandes in Berührung mit dem Boden und bleibt dort so lange liegen, bis es an das in Fahrtrichtung hintere Ende des umlaufenden Bandes gelangt ist, wenn sich die Vorrichtung über den Boden hinwegbewegt. Die Anzahl der Wiederholungen dieses Vorganges kann durch eine die umlaufende Kette berührungslos abtastende Abtasteinrichtung erfasst werden.

Ausgehend von diesem Stand der Technik liegt der vorliegenden Erfindung die Aufgabe zugrunde, einen verbesserten Ansatz zur Wegstreckenmessung und -berechnung zu schaffen, in der die oben erwähnten Nachteile bekannte Ausgestaltungen vermeidet und eine einfache, zuverlässige und genaue Wegstreckenmessung und -berechnung ermöglicht.

Diese Aufgabe wird durch den Gegenstand der unabhängigen Patentansprüche gelöst. Vorteilhafte Weiterbildungen sind in den Unteransprüchen definiert.

Gemäß Ausführungsbeispielen ist vorgesehen, den berührungslosen Sensor anzuordnen, um bei einer Bewegung der Baumaschine im Wechsel Kettenglieder der Raupenkette und Zwischenräume zwischen den Kettengliedern der Raupenkette zu erfassen, und um Signale zu erzeugen, die die Erfassung eines Kettenglieds und eines Zwischenraums angeben.

Die erfindungsgemäße Vorrichtung zur Wegstreckenmessung an einer Baumaschine ist vorteilhaft, da eine Bewegung bzw. ein Stillstand der Maschine zuverlässig durch den zumindest einen, am Chassis und im Bereich der Raupenkette angeordneten berührungslosen Sensor erkannt wird. Dieser Sensor ist gemäß Ausführungsbeispielen auf die Raupenkette gerichtet und erfasst bei einer Bewegung der Baumaschine im Wechsel die Kettenglieder und deren Zwischenräume. Durch die sich während der Fahrt der Baumaschine bewegenden Raupenkettenglieder werden Impulssignale generiert, auf Grundlage welcher ein zurückgelegter Weg der Maschine gemessen werden kann. Gemäß Ausführungsbeispielen ist vorgesehen, festzustellen, ob sich die Baumaschine bewegt oder nicht. Steht die Baumaschine, so wird dies durch den Sensor detektiert und es erfolgt keine Wegstreckenmessung bzw. -berechnung, beispielsweise wird das Aufsummieren von einzelnen Wegstreckenstücken oder -abschnitten angehalten und erst wieder bei einer Bewegung der Maschine fortgesetzt.

Im Vergleich zu einem hinter dem Vorderrad angeordneten berührungslosen Sensor gemäß der GB 2 255 640 A ist der erfindungsgemäße Ansatz vorteilhaft, da der Sensor auf einfache Art am Chassis der Baumaschine, beispielsweise in einem Radkasten oberhalb der Raupenkette, angebracht werden kann und damit leicht zugänglich ist. Im Reparaturfall bzw. zu Reinigungszwecken ist der Sensor an dieser Stelle gut erreichbar. Ferner werden keine zusätzlichen, sich drehenden Teile, wie beispielsweise eine Speiche, welche an der Achse des Vorderrads befestigt werden muss, benötigt.

Der erfindungsgemäße Ansatz ist weiterhin vorteilhaft, da er unabhängig von externen Positionswerten arbeitet und sich lediglich auf die tatsächliche Bewegung der Raupenkette verlässt, um eine Wegstrecke zu erfassen bzw. zu messen. Wie oben erwähnt wurde, existieren im Stand der Technik Ansätze, bei denen eine Wegstreckenmessung durch Aufsummieren einzelner, kleiner Wegstreckenabschnitte oder -stücke erfolgt, welche anhand von Positionswerten bestimmt werden, die kontinuierlich durch eine Positionsbestimmungseinrichtung, z.B. unter Zuhilfenahme eines GNSS-Empfängers, ermittelt werden. Der GNSS-Empfänger kann beispielsweise ein GPS-Empfänger (GPS = Global Positioning System) sein. Die mit solchen Ansätzen verbundenen Probleme bestehen beispielsweise darin, dass bei einem Stillstand der Maschine, z.B. wenn die Maschine an ein und derselben Stelle "verharrt", aufgrund von Schwankungen der GPS-Positionsdaten weiterhin eine Bewegung der Maschine erkannt wird und demnach weitere Werte für einen zurückgelegten Weg aufsummiert werden, so dass ein Ansatz, der nur auf einem satellitengestützten System basiert, zu fehlerhaften Wegmessungen führt. Je öfter die Maschine stehenbleibt und wieder weiterfährt, desto größer ist der entstehende Summierungsfehler. Ein derartiger Summierungsfehler tritt auch dann auf, wenn die Maschine sehr langsam fährt bzw. fahren muss, beispielweise wenn im Materialbunker eines Straßenfertigers nur noch sehr wenig Material vorhanden ist und im Zulauf der Lieferkette wenige LKWs unterwegs sind. Diese Nachteile werden erfindungsgemäß vermieden, indem ausgehend von einer tatsächlichen Bewegung der Raupenkette die Wegstrecke bestimmt wird.

Der erfindungsgemäße Ansatz ermöglicht eine Wegstreckenmessung und -berechnung, beispielsweise beim Bearbeiten einer Fläche bzw. eines Untergrunds durch eine Baumaschine, wobei die Nachteile der oben beschriebenen Systeme vermieden werden. Gegenüber Systemen, die auf GNSS-Signalen basieren, ermöglicht die vorliegende Erfindung eine Fortführung der Wegstreckenmessung bei Empfangsstörungen oder Ausfall des GNSS-Systems, beispielsweise bei einer Durchfahrt durch einen Tunnel oder unter einer Brücke, ohne den tatsächlichen Wegverlauf kennen zu müssen und ohne Zugriff auf die Maschinensteuerung haben zu müssen.

Dies ermöglicht die vorliegende Erfindung, auch als sogenanntes "hang-on"-System auszuführen, also als ein System, welches lösbar an der Baumaschine angeordnet ist und somit beispielsweise an verschiedenen Maschinentypen nachgerüstet werden kann, insbesondere in Anbetracht der Tatsache, dass die erfindungsgemäße Vorrichtung je nach Ausgestaltung der Auswerteeinheit keinen oder nur einen eingeschränkten Zugriff auf die Baumaschine bzw. die Maschinenparameter der Baumaschine benötigt.

Die Vorrichtung umfasst zusätzlich zumindest eine Positionsbestimmungseinrichtung zur Bestimmung der Position der Baumaschine, die die Position der Baumaschine unter Verwendung von Signalen eines globalen Navigationssatellitensystems oder eines terrestrischen Systems bestimmt. Bei dem globalen Navigationssatellitensystem kann es sich beispielsweise um das GPS-System handeln. Bei dem terrestrischen System kann beispielsweise eine Totalstation mit einem auf der Baumaschine angeordneten Prisma vorgesehen sein, oder eine Position der Baumaschine kann unter Verwendung von Lokalisierungstechniken aus dem Bereich der Mobilfunktechnik durchgeführt werden, beispielsweise durch eine GSM-Triangulation. Auch eine Kombination aus globalem Navigationssatellitensystem und terrestrischem System ist möglich, beispielsweise der Einsatz des sogenannten "Differential-GPS", um die in den Signalen des globalen Navigationssatellitensystems enthaltenen Ungenauigkeiten der Positionswerte zu korrigieren. In vorbestimmten Abständen wird die zurückgelegte Wegstrecke und/oder die der Wegstreckenberechnung zugrunde liegenden Parameter durch die Positionsdaten von der Positionseinrichtung korrigiert, wobei die der Wegstreckenberechnung zugrunde liegenden Parameter eine voreingestellte Summe von Kettengliedlänge und Länge eines Zwischenraumes zwischen zwei Kettengliedern umfasst. Gemäß Ausführungsbeispielen ist die Positionsbestimmungseinrichtung ein Teil einer Rechnereinheit und/oder einer Bedien- und Anzeigeeinheit der Baumaschine, die wirksam mit der Auswerteeinheit verbindbar ist.

Diese Ausgestaltung ist vorteilhaft, da hierdurch zusätzlich zur Wegstreckenmessung über die Erfassung der Bewegung der Raupenkette eine weitere Wegstreckenerfassung aufgrund der Positionssignale ermöglicht wird, wodurch die Genauigkeit der Wegstreckenmessung nochmals erhöht wird. Gemäß Ausführungsbeispielen wird in regelmäßigen Abständen, z.B. alle 10 m, die durch den berührungslosen Sender gemessene Wegstrecke korrigiert, ähnlich einer Vorgehensweise, wie sie in der WO 98/12505 A1 beschrieben wird. Je weiter die Baumaschine fährt, desto genauer wird eine Wegstreckenmessung durch den berührungslosen Sensor. Ist kein GPS-Signal vorhanden, beispielsweise beim Durchfahren unter Brücken oder in Tunneln, so kann die gefahrene Strecke der Maschine anhand der Erfassung der Bewegung der Raupenkette ermittelt werden und die Wegstreckenmessung bzw. -berechnung erfolgt trotz fehlendem GPS-Signal hinreichend genau.

Gemäß Ausführungsbeispielen umfasst die Vorrichtung zumindest einen an einem Arbeitswerkzeug der Baumaschine angeordnet Beschleunigungssensor zur Erfassung eines Arbeitszustands des Arbeitswerkzeugs. Gemäß Ausführungsbeispielen kann die Auswerteeinheit konfiguriert sein, um die Information, ob sich die Baumaschine bewegt oder nicht, mit der Information von dem Beschleunigungssensor und mit einer Information über eine aktuelle Einbaubreite eines Arbeitswerkzeugs der Baumaschine zu kombinieren, um eine durch die Baumaschine bearbeitete Fläche zu bestimmen. Gemäß Ausführungsbeispielen kann der Beschleunigungssensor ein einachsiger oder ein mehrachsiger Sensor sein.

Diese Ausgestaltung ist vorteilhaft, da die Information, ob sich die Maschine bewegt oder nicht, also im Stillstand ist, mit der Information von dem Beschleunigungssensor zur Erfassung eines Arbeitszustands des Arbeitswerkzeugs kombiniert werden kann, woraus abgeleitet werden kann, ob die Maschine während einer Bewegung arbeitet, beispielsweise ein Asphalteinbau oder ein Abfräsen durchgeführt wird oder nicht. Steht die Maschine, so wird beispielsweise bei einem Straßenfertiger üblicherweise die Vibration zum Verdichten des Asphalts und bei einer Straßenfräse die Frästrommel zum Abfräsen des Straßenbelags ausgeschaltet. Dies kann über den Beschleunigungssensor erfasst werden, so dass basierend auf diesen Informationen in Verbindung mit einer Information, über welche Breite das Arbeitswerkzeug der Maschine wirksam ist, eine Berechnung der durch die Maschine bearbeiteten Fläche auf einfache Art durchgeführt werden kann.

Der Beschleunigungssensor kann an einer beliebigen Stelle an dem Arbeitswerkzeug angeordnet sein, beispielsweise auf einer Einbaubohle eines Straßenfertigers oder seitlich an einer Frästrommel einer Straßenfräse. Der Beschleunigungssensor kann, wie erwähnt, ein ein- oder mehrachsiger Sensor sein, um Beschleunigungswerte in einer oder mehreren Richtungen zu messen, wobei solche Beschleunigungen üblicherweise beim Betrieb des Arbeitswerkzeugs entstehen, beispielsweise durch die Vibration der Einbaubohle beim Verdichten des Asphalts oder durch eine Vibration bei der Drehung einer Frästrommel bei einer Straßenfräse.

Gemäß Ausführungsbeispielen umfasst der berührungslose Sensor zumindest zwei Sensorköpfe in einem Gehäuse. Gemäß einem Ausführungsbeispiel umfasst die Vorrichtung zumindest zwei berührungslose Sensoren, die auf einer Seite der Baumaschine mit einem Abstand zueinander angeordnet sind, wobei gemäß Ausführungsbeispielen ein erster berührungsloser Sensor auf einen ersten Bereich, z.B. einen vorderen Bereich, der Raupenkette und ein zweiter berührungsloser Sensor auf einen zweiten Bereich, z.B. einen hinteren Bereich, der Raupenkette gerichtet ist. Ferner kann gemäß Ausführungsbeispielen vorgesehen sein, einen ersten berührungslosen Sensor auf einer ersten Seite der Baumaschine anzuordnen, und einen zweiten berührungslosen Sensor auf einer zweiten, der ersten Seite gegenüberliegenden Seite der Baumaschine anzuordnen, wobei die Auswerteeinheit konfiguriert ist, um unter Verwendung der Signale von dem ersten berührungslosen Sensor und von dem zweiten berührungslosen Sensor zu bestimmen, ob die Baumaschine geradeaus oder eine Kurve fährt.

Die Verwendung mehrerer Sensoren bzw. mehrerer Sensorköpfe ist vorteilhaft, da hierdurch eine redundante Erfassung der Bewegung der Raupenkette ermöglicht wird, so dass beispielsweise sich ändernde Abstände zwischen den Kettengliedern berücksichtigt werden können. Ebenso können die Signale von den verschiedenen Sensoren auf ihre Plausibilität überprüft werden, um beispielsweise Signale, die als nicht richtig erkannt werden, bei der Wegstreckenmessung nicht zu berücksichtigen. Der Einsatz mehrerer Sensoren ist auch vorteilhaft, wenn mit Verschmutzungen zwischen den Kettengliedern zu rechnen ist, so dass beispielsweise ein erster Sensor Probleme hat, die Unterschiede zwischen Kettenglied und Zwischenraum zu erkennen, was aber durch einen anderen Sensor, z.B. nach Abfall der Verschmutzung, möglich ist. Eine Anordnung der Sensoren auf unterschiedlichen Seiten der Maschine ist vorteilhaft, da hierdurch auf einfache Art durch die Auswerteeinheit auch die Kurvenfahrt bei der Wegstreckenmessung berücksichtigt werden kann.

Gemäß Ausführungsbeispielen umfasst die Vorrichtung ein Bussystem, das den berührungslosen Sensor und die Auswerteeinheit verbindet, und eine Schnittstelle, die konfiguriert ist, um das Bussystem mit einer Rechnereinheit und/oder einer Bedien- und Anzeigeeinheit der Baumaschine zu verbinden. Gemäß Ausführungsbeispielen ist vorgesehen, dass die Auswerteeinheit konfiguriert ist, um die durch den berührungslosen Sensor erhaltenen Sensorwerte auf der Bedien- und Anzeigeeinheit der Baumaschine anzuzeigen. Gemäß weiteren Ausführungsbeispielen kann vorgesehen sein, dass die Schnittstelle konfiguriert ist, um das Bussystem mit einer Kommunikationseinrichtung der Baumaschine zu verbinden, die vorgesehen ist, um eine drahtlose Kommunikation mit zumindest einer anderen Baumaschine und/oder einem Baustellenbüro zu ermöglichen, wobei vorgesehen sein kann, die von der Auswerteeinheit bereitgestellten Daten an einen mobilen Rechner oder an das Baustellenbüro zu senden.

Die erfindungsgemäße Vorrichtung kann somit auf einfache Art und ohne großen Aufwand an existierende Anschlüsse der Baumaschine angeschlossen werden, um eine Kommunikation mit der Rechnereinheit und/oder einer Bedien- und Anzeigeeinheit der Baumaschine zu ermöglichen, um beispielsweise über die Anzeigeeinheit die erhaltenen Sensorwerte bzw. die hieraus erzeugte zurückgelegte Wegstrecke bzw. bearbeitete Fläche anzuzeigen und damit den Bediener der Baumaschine bereitzustellen. Über die Kommunikationseinrichtung kann eine Übertragung der Daten auch an externen Positionen, beispielsweise ein Baustellenbüro, durchgeführt werden, um die erforderliche Protokollierung des Baufortschritts an einer zentralen Stelle durchzuführen. Ferner kann aufgrund der Kommunikation mit anderen Baumaschinen sichergestellt werden, dass bereits bearbeitete Flächen nicht nochmals bearbeitet werden.

Gemäß Ausführungsbeispielen sind die Komponenten der Vorrichtung zur Wegstreckenmessung lösbar an der Baumaschine befestigt.

Diese Ausgestaltung ist vorteilhaft, da keine Modifizierung der eigentlichen Baumaschine erforderlich ist, vielmehr können die Komponenten der erfindungsgemäßen Vorrichtung auf einfache Art durch geeignete Mittel an der Baumaschine befestigt werden und die Auswerteeinheit kann, beispielsweise über die oben beschriebene Schnittstelle mit der Steuereinheit der Baumaschine auf einfache Art verbunden werden. Alternativ kann die Auswerteeinheit auch als Teil der Rechnereinheit oder einer anderen Einheit der Baumaschine ausgestaltet sein. Somit eignet sich das erfindungsgemäße System insbesondere als Nachrüstsystem, wie es oben bereits kurz erläutert wurde.

Das erfindungsgemäße Verfahren zur Wegstreckenmessung bietet die oben im Zusammenhang mit der erfindungsgemäßen Vorrichtung angegebenen Vorteile.

Das erfindungsgemäße Verfahren umfasst ferner das Bestimmen der Position der Baumaschine und das Messen der von der Baumaschine zurückgelegten Wegstrecke, anhand der erfassten Bewegung der Raupenkette an bestimmten Positionen der Baumaschine, wobei die Position der Baumaschine unter Verwendung von Signalen eines globalen Navigationssatellitensystems oder eines terrestrischen Systems bestimmt wird, und wobei die Wegstrecke, die anhand der Bewegung der Raupenkette erfasst wurde, durch Wegstreckenstücke, die anhand von kontinuierlich bestimmten Positionswerten der Baumaschine bestimmt werden, korrigiert werden.

Die Erfassung der Wegstrecke basierend auf den Signalen des berührungslosen Sensors, welcher auf die Raupenkette gerichtet ist, und basierend auf den Positionsinformationen ist vorteilhaft, da hierdurch eine Berechnung der Wegstrecke beispielsweise basierend auf einer Umrechnung und Aufsummierung der durch den Sensor erzeugten Impulse erzeugt wird, die zusätzlich durch die kontinuierlich gemessenen Positionswerte durch den GNSS-Empfänger unterstützt bzw. korrigiert wird.

Gemäß Ausführungsbeispielen wird bestimmt, ob ein Arbeitswerkzeug der Baumaschine aktiviert ist, und die von der Baumaschine bearbeitete Fläche wird anhand der erfassten Bewegung der Raupenkette und Aktivierung des Arbeitswerkzeugs gemessen, wobei die Aktivierung gemäß Ausführungsbeispielen ein Erfassen eines Beschleunigungsarbeitswerkzeugs umfasst.

Basierend auf den von dem Sensor erfassten Signalen betreffend die zurückgelegte Wegstrecke und basierend auf den Informationen betreffend die Aktivierung des Arbeitswerkzeugs und vorzugsweise noch basierend auf einer aktuellen Einbaubreite des Arbeitswerkzeugs kann auf einfache Art die durch die Baumaschine bearbeitete Fläche bzw. der bearbeitete Untergrund erfasst werden. Dies kann ferner unter Verwendung der zusätzlichen Positionswerte, beispielsweise von dem GNSS-Empfänger, erfolgen.

Bevorzugte Ausführungsformen der vorliegenden Erfindung werden nachfolgend unter Bezugnahme auf die beiliegenden Zeichnungen näher erläutert. Es zeigen:
- Fig. 1: eine schematische Darstellung eines Straßenfertigers, der die erfindungsgemäße Vorrichtung gemäß Ausführungsbeispielen aufweist;
- Fig. 2: eine alternative Ausgestaltung der erfindungsgemäßen Vorrichtung gemäß einem weiteren Ausführungsbeispiel;
- Fig. 3a: vergrößerte Darstellung des hinteren Teils der Raupenkette des Straßenfertigers aus Fig. 1;
- Fig. 3b: ein Diagramm, welches die durch den Sensor erzeugten Signale darstellt;
- Fig. 4a: die Anordnung eines doppelköpfigen Sensors gemäß einem Ausführungsbeispiel;
- Fig. 4b: die durch die zwei Sensoren erhaltenen Ausgangssignale;
- Fig. 5: die durch zwei Sensoren beim Vorwärtsfahren der Baumaschine erhaltenen Ausgangssignale;
- Fig. 6: die durch zwei Sensoren beim Rückwärtsfahren der Baumaschine erhaltenen Ausgangssignale;
- Fig. 7: ein Flussdiagramm des Verfahrens zur Wegstreckenmessung an einer Baumaschine;
- Fig. 8: ein Flussdiagramm gemäß einem Ausführungsbeispiel des erfindungsgemäßen Verfahrens; und
- Fig. 9: ein Flussdiagramm, welches ein weiteres Ausführungsbeispiel des erfindungsgemäßen Verfahrens darstellt.

Nachfolgend werden Ausführungsbeispiele der vorliegenden Erfindung unter Bezugnahme auf die beiliegenden Zeichnungen näher erläutert, wobei in den beiliegenden Zeichnungen gleiche oder gleichwirkende Elemente mit den gleichen Bezugszeichen versehen sind. Ferner wird darauf hingewiesen, dass die nachfolgende Beschreibung von bevorzugten Ausführungsbeispielen der vorliegenden Erfindung anhand eines Straßenfertigers erfolgt, wobei die vorliegende Erfindung aber nicht auf die Anwendung bei einem Straßenfertiger beschränkt ist. Vielmehr findet die vorliegende Erfindung Anwendung auf jegliche Art von Baumaschine mit einem Raupenkettenantrieb, beispielsweise Straßenfräsen mit einer Frästrommel, Planierraupen mit einem Stahlschild, Pistenraupen, Bagger mit Raupenfahrwerk, Laderaupen, auf Raupenantrieben montierte Bohrgeräte oder Arbeitsbühnen, Raupenfräsen und Ähnliches.

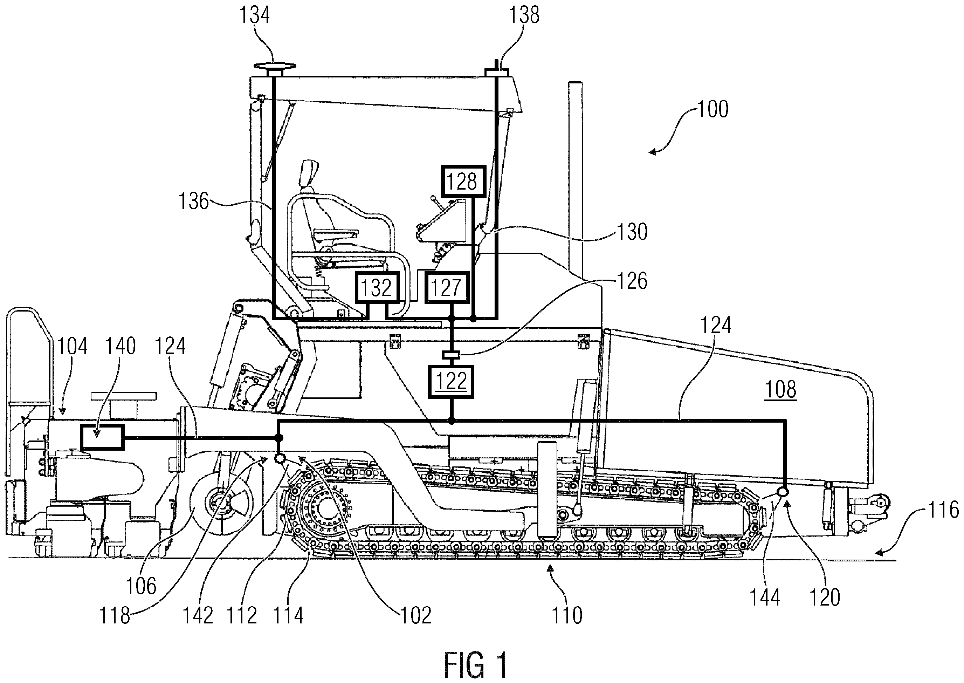

Fig. 1 ist eine schematische Darstellung eines Straßenfertigers 100, der die erfindungsgemäße Vorrichtung gemäß Ausführungsbeispielen aufweist, um eine durch den Straßenfertiger 100 zurückgelegte Wegstrecke zu messen. Der Straßenfertiger 100 umfasst ein Chassis 102, eine Einbaubohle 104, eine Verteilerschnecke 106, einen Materialbunker 108 sowie eine Raupenkette 110. Die Raupenkette 110 des Raupenkettenantriebs des

Straßenfertigers 100 umfasst eine Mehrzahl von Kettengliedern 112, die voneinander durch einen Zwischenraum beabstandet sind, wobei in Fig. 1 mit den Bezugszeichen 114 ein solcher Raum bzw. Zwischenraum zwischen zwei benachbarten Kettengliedern 112 gezeigt ist. Der Straßenfertiger 100 gemäß Fig. 1 steht auf einem Untergrund 116, wobei ein Bereich auf dem Untergrund 116 hinter dem Straßenfertiger bearbeitet werden soll, beispielsweise durch Einbringen einer Asphaltdecke durch den Straßenfertiger auf eine an sich bekannte Art.

Der Straßenfertiger 100 umfasst die erfindungsgemäße Vorrichtung zur Erfassung der Wegstrecke bzw. zur Wegstreckenmessung gemäß einem Ausführungsbeispiel. Die Vorrichtung umfasst einen ersten berührungslosen Sensor 118 und einen zweiten berührungslosen Sensor 120. Die Sensoren 118 und 120 sind in Fig. 1 schematisch dargestellt und sind beispielsweise über geeignete Befestigungsmittel, beispielsweise Schrauben oder Rastvorrichtungen, an dem Chassis 102 des Straßenfertigers 100 angeordnet, beispielsweise innerhalb eines Radkastens, in dem die Raupenkette 110 angeordnet ist. Ferner umfasst die Vorrichtung eine Auswerteeinheit 122, die in Fig. 1 ebenfalls schematisch dargestellt ist, und an einer geeigneten Stelle der Baumaschine, beispielsweise im Bereich der Führerkanzel, aber auch an anderen Stellen, angeordnet sein kann, beispielsweise über eine lösbare Schraub- oder Rastverbindung. Die Sensoren 118 und 122 sind über ein Bussystem 124 mit der Auswerteeinheit 122 verbunden, beispielsweise über einen CAN-Bus. Der Bus 124 umfasst ferner eine Schnittstelle 126, um die erfindungsgemäße Vorrichtung gemäß Ausführungsbeispielen mit weiteren Steuereinheiten bzw. Steuerkomponenten des Straßenfertigers 100 zu verbinden, oder um ein Auslesen der durch die Auswerteeinheit 122 erzeugten Signale, welche die Wegstrecke anzeigen, zu ermöglichen. Der Straßenfertiger 100 umfasst einen Steuerungsrechner 127 sowie eine Bedienund Anzeigevorrichtung 128, die über einen Systembus 130, z.B. den CAN-Bus, verbunden sind. Die Auswerteeinheit 122 bzw. die erfindungsgemäße Vorrichtung zur Erfassung der Wegstrecke des Straßenfertigers 100 kann gemäß Ausführungsbeispielen über die Schnittstelle 126 mit dem Bus 130 des Straßenfertigers verbunden sein, so dass die von der Auswerteeinheit 122 bereitgestellten Signale an den Steuerungsrechner 127 und/oder an die Bedien- und Anzeigevorrichtung 128 bereitgestellt werden.

Gemäß anderen Ausführungsbeispielen kann vorgesehen sein, die Auswerteeinheit 122 als Teil des Steuerungsrechners 127 auszugestalten.

Der Straßenfertiger 100 umfasst ferner eine Positionsbestimmungseinrichtung 132, beispielsweise eine GNSS-Positionsbestimmungseinrichtung, die mit einem GNSS-Empfänger 134 über eine Anschlussleitung 136 verbunden ist. Die Positionsbestimmungseinrichtung 132 ist ferner über den CAN-Bus 130 mit dem Steuerungsrechner 127 des Straßenfertigers 100 verbunden. Über die Schnittstelle 126 können die Positionsdaten von der Positionsbestimmungseinrichtung 132 an die Auswerteeinheit 122 bereitgestellt werden. Anstelle des gerade erwähnten GNSS-Positionsbestimmungssystems können auch andere Positionsbestimmungssysteme vorgesehen sein, entweder andere satellitengestützte Systeme oder andere terrestrische System. Beispielsweise kann eine Totalstation mit einem auf dem Straßenfertiger 100 angeordneten Prisma vorgesehen sein, oder ein Mobilfunk-Sender ist vorgesehen, um eine GSM-Triangulation hinsichtlich der Position des Straßenfertigers 100 durchzuführen. Ebenso kann eine Kombination aus satellitengestütztem und terrestrischem System eingesetzt werden, beispielsweise ein Differential-G PS-System.

Der Straßenfertiger 100 gemäß Fig. 1 umfasst ferner eine Kommunikationseinrichtung 138, beispielsweise in Form einer Sende/Empfangs-Antenne, die über den Bus 130 mit dem Steuerungsrechner 127 und über die Schnittstelle 126 mit der Auswerteeinheit 122 verbunden ist. Die Kommunikationseinrichtung 138 ermöglicht eine bidirektionale Kommunikation zwischen dem Straßenfertiger 100 und anderen im Bereich einer Baustelle befindlichen Baumaschinen oder Baugeräten und/oder eine Kommunikation mit einer zentralen Verwaltungsstelle, beispielsweise einem Baustellenbüro, um eine Kommunikation von Daten an diese verschiedenen Positionen zu ermöglichen, beispielsweise um Protokolldaten über die zurückgelegte Wegstrecke und die eingebaute Fläche an das Baustellenbüro zu übersenden.

Die anhand der Fig. 1 dargestellte erfindungsgemäße Vorrichtung umfasst gemäß dem gezeigten Ausführungsbeispiel ferner einen Beschleunigungssensor 140, der in Fig. 1 schematisch dargestellt ist und bei dem gezeigten Ausführungsbeispiel oberhalb der Einbaubohle 104 angeordnet ist. Auf Grundlage der Ausgangssignale des Beschleunigungssensors 140 bestimmt die Auswerteeinheit 122, ob die Einbaubohle aktiv ist oder nicht, also ob durch den Straßenfertiger 100 gerade ein Einbau von Asphaltmaterial durchgeführt wird oder nicht. Der Beschleunigungssensor 140 ist über dem Bus 124 mit der Auswerteeinheit 122 verbunden. Der am Straßenfertiger 100 gemäß dem dargestellten Ausführungsbeispiel der erfindungsgemäßen Vorrichtung vorgesehene Beschleunigungssensor 140 kann auch seitlich an der Einbaubohle 104 befestigt sein. Ferner kann ein mehrachsiger oder ein einachsiger Sensor verwendet werden. Der Sensor 140 erfasst den Arbeitszustand der Einbaubohle 104, um zu detektieren, ob der Straßenfertiger 100 arbeitet, also Asphaltmaterial eingebaut wird oder nicht.

Bei dem in Fig. 1 dargestellten Ausführungsbeispiel der vorliegenden Erfindung handelt es sich bei den Sensoren 118 und 120 um berührungslose Sensoren, die auf unterschiedliche Bereiche der Raupenkette 110 gerichtet sind. Vorzugsweise handelt es sich bei den Sensoren 118 und 120 um Ultraschallsensoren, wobei der erste Sensor 118 im hinteren Bereich der Raupenkette 110, vor der Verteilerschnecke 106 angeordnet ist, und der zweite Sensor im vorderen Bereich der Raupenkette 110, unterhalb des Materialbunkers 108 angeordnet ist. Beide Sensoren sind bezüglich ihrer Sensorerfassungsbereiche 142, 144 ausgerichtet, um eine Bewegung der Raupenkette 110 zu erfassen. Die Sensoren 118 und 120 erfassen bei einer Bewegung des Straßenfertigers 100 jeweils im Wechsel die Kettenglieder 112 und die Zwischenräume 114 und erzeugen entsprechende Signale, beispielsweise Impulssignale, die nachfolgend noch näher erläutert werden.

Die Sensoren 118, 120 und 140 sind über die Verkabelung 124, vorzugsweise in Form eines Bussystems, beispielsweise des CAN-Busses miteinander und mit der Auswerteeinheit 122 verbunden. Über die Schnittstelle 126 ist eine Verbindung mit dem Steuerungsrechner 127 gegeben, so dass über das Bussystem Signale und Nachrichten ausgetauscht werden können. An dem Steuerungsrechner 127 sind weitere Komponenten des Straßenfertigers 100, nämlich die Bedien- und Anzeigeeinheit 128, die Positionsbestimmungseinrichtung 132 und die Kommunikationseinrichtung 138 angeschlossen, wiederum über eine Verkabelung 130, beispielsweise in Form eines Bussystems, um eine Kommunikation der Komponenten untereinander zu ermöglichen. Die Bedien- und Anzeigeeinheit 128 dient als Schnittstelle zwischen einem Maschinenbediener bzw. -fahrer und ist gemäß Ausführungsbeispielen ausgebildet, um gemessene, berechnete und über das Bussystem 124, 130 übertragene Werte anzuzeigen. Die Kommunikationseinrichtung 138 dient dazu, gemessene, berechnete und über das Bussystem erhaltene Werte an andere Maschinen oder an externe Stellen, wie beispielsweise ein Baustellenbüro, zu übertragen, beispielsweise über einen Satelliten- oder Mobilfunkstrecke.

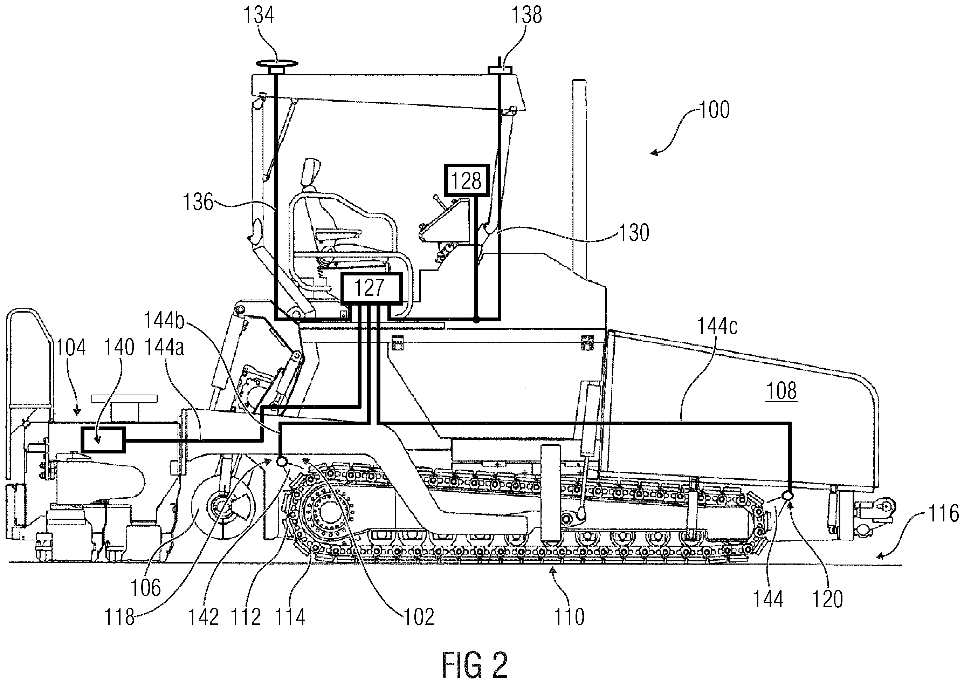

Fig. 2 zeigt eine alternative Ausgestaltung der erfindungsgemäßen Vorrichtung gemäß einem weiteren Ausführungsbeispiel. Fig. 2 zeigt wiederum einen Straßenfertiger, der vom Aufbau dem Straßenfertiger aus Fig. 1 entspricht, so dass eine erneute Beschreibung der bereits anhand der Fig. 1 beschriebenen Komponenten des Straßenfertigers nicht erfolgt. Bei dem in Fig. 2 dargestellten Ausführungsbeispiel ist die Auswerteeinheit der erfindungsgemäßen Vorrichtung als Teil des Steuerungsrechners 127 der Baumaschine 100 ausgestaltet, wobei der Steuerungsrechner 127 bei dem gezeigten Beispiel ferner die Positionsbestimmungseinrichtung beinhaltet. Der GNSS-Empfänger 134 ist, wie in Fig. 1, über die Anschlussleitung 136 mit dem Steuerungsrechner 127 verbunden. Ferner ist der bereits anhand der Fig. 1 beschriebene Bus 130 dargestellt, über den der Steuerungsrechner 127, die Bedien- und Anzeigevorrichtung 128 und die Kommunikationseinrichtung 138 miteinander verbunden sind. Die Vorrichtung gemäß der Ausgestaltung gemäß Fig. 2 umfasst die gleichen Sensoren wie in Fig. 1, allerdings sind diese nicht über ein gemeinsames Bussystem miteinander und mit der Auswerteeinheit (Steuerungsrechner 127) verbunden, sondern über jeweils separate Verkabelungen 144a bis 144c. Dies ermöglicht den Einsatz von Sensoren, welche beispielsweise nicht "busfähig" sind, beispielsweise solche Sensoren, die keine Schnittstelle für einen Anschluss an ein Bussystem aufweisen bzw. solche Sensoren, die lediglich eine analoge Schnittstelle aufweisen.

Die in dem Steuerungsrechner 127 angeordnete Positionsbestimmung bewirkt eine kontinuierliche Ermittlung der Position des Straßenfertigers 100 über den GNSS-Empfänger 134 und ermöglicht eine Korrektur der durch die berührungslosen Sensoren 118, 120 gemessenen Wegstrecke, indem beispielsweise in regelmäßigen Abständen von 10 m gefahrener Wegstrecke die durch die Sensoren 118, 120 gemessene Wegstrecke korrigiert wird, beispielsweise durch Korrektur eines voreingestellten bzw. letztmalig eingestellten Abstands der Kettenglieder 112, welcher dann als Basis für eine nachfolgende Wegstreckenberechnung verwendet wird.

Anstelle der in Fig. 2 dargestellten Ausgestaltung, bei der der Steuerungsrechner 127 die Positionsbestimmungseinrichtung beinhaltet, kann bei anderen Ausführungsbeispielen vorgesehen sein, den Steuerungsrechner in die Bedien- und Anzeigeeinheit 128 zu integrieren. In einer solchen Ausgestaltung kann auch die Positionsbestimmungseinrichtung als Teil der Steuer- und Anzeigeeinheit 128 ausgestaltet sein. Alternativ kann die Positionsbestimmungseinrichtung ähnlich wie in Fig. 1 vorgesehen sein und zusätzlich kann die Funktion der Auswerteeinheit der erfindungsgemäßen Vorrichtung in die Positionsbestimmungseinrichtung integriert sein.

Anhand der Fig. 1 und 2 wurde lediglich eine Seite des Straßenfertigers 100 und der auf dieser Seite angeordnete Antrieb dargestellt. Ein entsprechender Antrieb befindet sich auf der gegenüberliegenden Seite und gemäß Ausführungsbeispiel kann vorgesehen sein, eine zur Ausgestaltung gemäß Fig. 1 und 2 korrespondierende Anordnung der berührungslosen Sensoren auch auf der gegenüberliegenden Seite vorzusehen, so dass beide Raupenketten des Straßenfertigers 100 über entsprechende Sensoren überwacht werden, wodurch zusätzlich die Möglichkeit besteht, Kurvenfahrten zu erkennen.

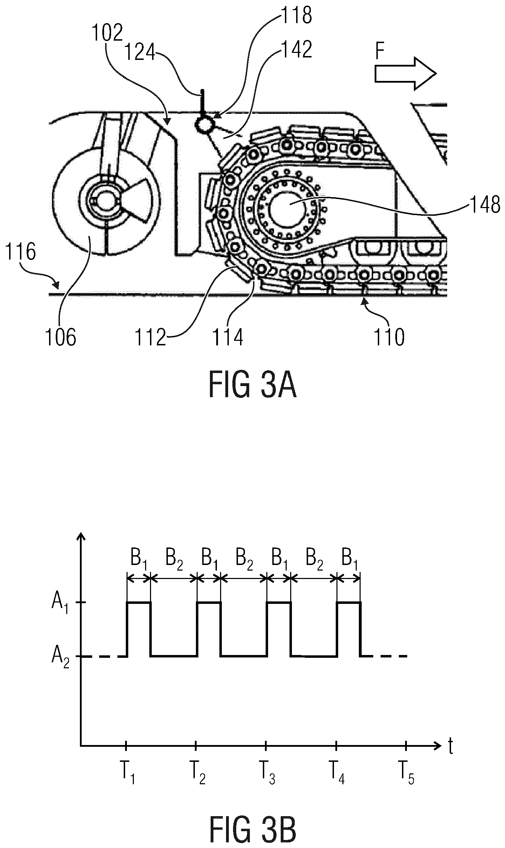

Anhand der Fig. 3 wird nun die Erfassung der Wegstrecke, die durch den Straßenfertiger 100 bei einer Bewegung desselben zurückgelegt wird, näher erläutert, wobei Fig. 3a eine vergrößerte Darstellung des hinteren Teils der Raupenkette 110 des Straßenfertigers 100 aus Fig. 1 darstellt, und Fig. 3b ist ein Diagramm, welches die durch den Sensor 118 erzeugten Signale darstellt.

In Fig. 3a ist der Sensor 118 dargestellt, der auf die anhand der Fig. 1 beschriebene Art angeordnet ist und mit dem CAN-Bus 124 verbunden ist. In Fig. 3a zeigt der Pfeil F eine Fahrtrichtung des Straßenfertigers 100 an, und ferner ist der hintere Teil der Raupenkette 110 dargestellt, wobei in der vergrößerten Darstellung die einzelnen Kettenglieder 112 und der Zwischenraum 114 zwischen diesen Kettengliedern deutlicher zu erkennen sind. Ferner ist zu erkennen, dass der Erfassungsbereich 142 des Sensors 118 auf den hinteren Bereich der Raupenkette 110 gerichtet ist, und zwar auf eine Position, an der die Raupenkette 110 um das Rad 148 geführt ist, und somit ein aufgrund der Führung der Kette im Bereich des Rads 48 bekannter, fester Abstand 114 zwischen den Kettengliedern 112 vorliegt. Im Bereich, in dem die Raupenkette 114 nicht durch das Rad 148 geführt ist, ist der Abstand, wie aus Fig. 3a ersichtlich ist, geringer und kann sich auch entlang der Bewegung der Raupenkette ändern, so dass vorzugsweise die Erfassung der Raupenkette 110 im Bereich einer Führung der Raupenkette durchgeführt wird.

Bei einer Bewegung des Straßenfertigers 100 wird die Raupenkette 110 entweder im Uhrzeigersinn oder entgegen des Uhrzeigersinns bewegt, wobei in Fig. 3 eine Bewegung im Uhrzeigersinn in Fahrtrichtung F angenommen ist. Die Bewegung der Raupenkette 110 bewirkt ein Ausgangssignal des Sensors 118, wie es anhand der Fig. 3b dargestellt ist. Das Ausgangssignal des Sensors 118, beispielsweise eines Ultraschallsensors, ist im Wesentlichen ein Rechtecksignal, welches sich bei einer Bewegung des Straßenfertigers 100 mit gleichmäßiger bzw. annähernd konstanter Geschwindigkeit einstellt.

Wie oben erwähnt, ist der Zwischenraum 114 zwischen zwei Kettengliedern 112 in einem Bereich, in dem die Raupenkette 110 beispielsweise auf dem Untergrund 116 aufliegt, sehr klein, wohingegen sich der Zwischenraum 114 zwischen zwei Kettengliedern 112 im Umlenkbereich 148, in dem der Sensor 118 angeordnet ist, vergrößert und aufgrund der Führung 148 einen definierten Abstand aufweist. Der Sensor 118, beispielsweise in Form eines Ultraschallsensors, erfasst bei einer Bewegung der Raupenkette 110 die unterschiedlichen Abstände zur Raupenkette 110, welche sich dadurch einstellen, dass ein Abstand zwischen Sensor 118 und Raupenkette 110 geringer ist, wenn sich ein Kettenglied 112 am Sensor 118 vorbeibewegt, und der Abstand im Zwischenraum 114 größer ist. In Fig. 3b ist entlang der Y-Achse der Abstand des Sensors 118 von der Raupenkette 110 angegeben, und das vom Sensor 118 ausgegebene Signal zeigt einen ersten, größeren Abstand A₁ an, wenn ein Zwischenraum 114 den Sensor 118 passiert, und ein zweites, gegenüber dem ersten Signal niedrigeres Signal A2, welches einen geringeren Abstand anzeigt, wenn ein Kettenglied 112 am Sensor 118 vorbeibewegt wird. Entlang der X-Achse ist die Zeit aufgetragen, und der Signalverlauf zeigt an, für welche Dauer ein Zwischenraum B₁ bzw. ein Kettenglied B₂ erfasst wurde. Mit anderen Worten entspricht der vom Sensor 118 erfasste Zwischenraum 114 zwischen zwei Kettengliedern 112 einem gemessenen Abstand A₁ und eine Impulsbreite B₁, und das vom Sensor 118 erfasste Kettenglied 112 der Raupenkette 110 entspricht einem gemessenem Abstand A₂ und einer Impulsbreite B₂. Unter Verwendung des in Fig. 3b gezeigten Signalverlaufs bestimmt die Auswerteeinheit 122 (siehe Fig. 1) die Wegstrecke, die durch den Straßenfertiger 100 in einer vorbestimmten Zeiteinheit zurückgelegt wurde, und zwar, indem bei jedem Zählimpuls des in Fig. 3b gezeigten Signalverlaufs die Summe bestehend aus voreingestellter bzw. letztmalig eingestellter Länge eines Kettengliedes 112 sowie dem Zwischenraum 114 zwischen zwei benachbarten Kettengliedern 112 der auf dem Untergrund 116 aufliegenden Raupenkette 110 aufaddiert wird. Beispielsweise entspricht die Länge eines Kettengliedes 112 bei einem Straßenfertiger ca. 15 cm und der Zwischenraum 114 zwischen zwei benachbarten Kettengliedern 112 bei einer auf dem Untergrund 116 aufliegenden Raupenkette 110 ca. 1,5 cm. Demnach werden bei jedem Zählimpuls des in Fig. 3b gezeigten Signalverlaufs 16,5 cm zum bereits zurückgelegten und gespeicherten Wegstreckenweg hinzuaddiert.

Werden zwei Sensoren 118 und 120 verwendet, so wird hierdurch die Auflösung erhöht, d.h. bei jedem durch die beiden Sensoren 118 und 120 generierten Zählimpulse wird die Hälfte der Summe bestehend aus voreingestellter bzw. letztmalig eingestellter Länge eines Kettengliedes 112 sowie dem Zwischenraum 114 zwischen zwei benachbarten Kettengliedern 112 der auf dem Untergrund 116 aufliegenden Raupenkette 110 aufaddiert. Bei einer wie oben angegebenen Summe der Länge eines Kettenglieds 112 und des Zwischenraums 114 von ca. 16,5 cm muss demnach bei jedem Zählimpuls des in Fig. 3b gezeigten Signalverlaufs nur 8,25 cm zum bereits zurückgelegten und gespeicherten Wegstreckenweg hinzuaddiert werden.

Weiterhin wird durch die Verwendung von zwei Sensoren 118 und 120 eine redundante Anordnung geschaffen, wodurch Fehler beim Erfassen der Kettenglieder 112 bzw. der Zwischenräume beispielweise durch ausgebrochene Kettenglieder oder Verschmutzungen der Zwischenräume korrigiert werden können. Auch können bei einem Ausfall bzw. Defekt eines der beiden Sensoren 118 oder 120 die Signale bzw. Zählimpulse des jeweils anderen Sensors zur Berechnung der Wegstrecke verwendet werden.

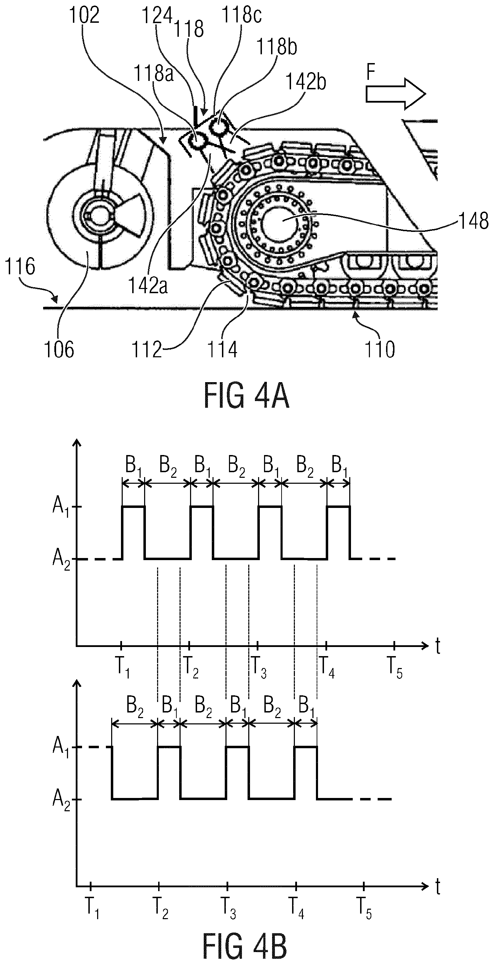

Die Fig. 4 zeigt die Messung der Wegstrecke, die durch einen Straßenfertiger zurückgelegt wird, unter Verwendung eines doppelköpfigen Sensors gemäß einer weiteren Ausführungsform der erfindungsgemäßen Vorrichtung. Fig. 4a zeigt die Anordnung eines doppelköpfigen Sensors gemäß diesem Ausführungsbeispiel, und Fig. 4b zeigt die durch die zwei Sensoren erhaltenen Ausgangssignale.

Fig. 4a zeigt eine Anordnung des Sensors 118 im hinteren Bereich der Raupenkette 110, ähnlich wie in Fig. 3a, wobei der Sensor 118 zwei Sensorköpfe 118a und 118b umfasst, welche innerhalb eines gemeinsamen Gehäuses 118c des Sensors 118 angeordnet sind. Die Sensorköpfe 118a und 118b sind derart versetzt angeordnet, dass deren Erfassungsbereiche 142a, 142b teilweise überlappend sind. Beide Sensorköpfe 118a und 118b sind so ausgerichtet, dass eine Bewegung der Raupenkette 110 von beiden Sensorköpfen 118a, 118b erfasst wird. Bewegt sich der Straßenfertiger 100 in Fahrtrichtung F, so wird die Raupenkette 110 im Uhrzeigersinn bewegt, was zu den in Fig. 4b gezeigten Ausgangssignalen führt, wobei das obere Diagramm in Fig. 4b das Ausgangssignal betreffend die Abstandswerte, wie es durch den Sensorkopf 118a erfasst wird, und das untere Diagramm die Sensorwerte betreffend die Abstandswerte vom Sensorkopf 118b darstellt.

Ähnlich zu dem in Fig. 3b gezeigten Diagramm werden in dem Diagramm gemäß Fig. 4b auf der X-Achse die Abstände A₁, A₂ und auf der Y-Achse mehrere Zeitpunkte T₁ bis T₅ dargestellt, an denen jeweils ein Wechsel vom gemessenen Abstand A₂ (Abstand zum Kettenglied 112) zum gemessenen Abstand A₁ (Abstand zur Kette durch den Zwischenraum 114) erfolgt, d.h. ein Wechsel zwischen Kettenglied 112 und Zwischenraum 114 zwischen den zwei Kettengliedern 112. Wie im Diagramm gemäß 4b zu erkennen ist, entsteht aufgrund der versetzten Anordnung der Sensorköpfe 118a und 118b ein zeitlicher Versatz zwischen Signal- bzw. Impulsverläufen, so dass beispielsweise zwischen den Zeitpunkten T₁ und T₂ vom Sensorkopf 118a der Zwischenraum 114 zwischen zwei Kettengliedern 112 erkannt wird (Abstandswert A₁, Impulsbreite B₁), während der Sensorkopf 118b zwischen diesen Zeitpunkten ein Kettenglied 112 erkennt (Abstandswert A₂, Impulsbreite B₂).

Vergleichbar wie oben bei der Verwendung von zwei Sensoren 118 und 120 im vorderen und hinteren Bereich des Straßenfertigers, wird durch die Verwendung eines doppelköpfigen Sensors die Auflösung der Wegstreckenberechnung erhöht, d.h. bei jedem durch die beiden Sensorköpfe 118a und 118b generierten Zählimpulse wird die Hälfte der Summe bestehend aus voreingestellter bzw. letztmalig eingestellter Länge eines Kettengliedes 112 sowie dem Zwischenraum 114 zwischen zwei benachbarten Kettengliedern 112 der auf dem Untergrund 116 aufliegenden Raupenkette 110 aufaddiert. Bei einer wie bereits oben angegebenen Summe der Länge eines Kettenglieds 112 und des Zwischenraums 114 von ca. 16,5 cm muss demnach bei jedem Zählimpuls der Sensorköpfe nur 8,25 cm zum bereits zurückgelegten und gespeicherten Wegstreckenweg hinzuaddiert werden.

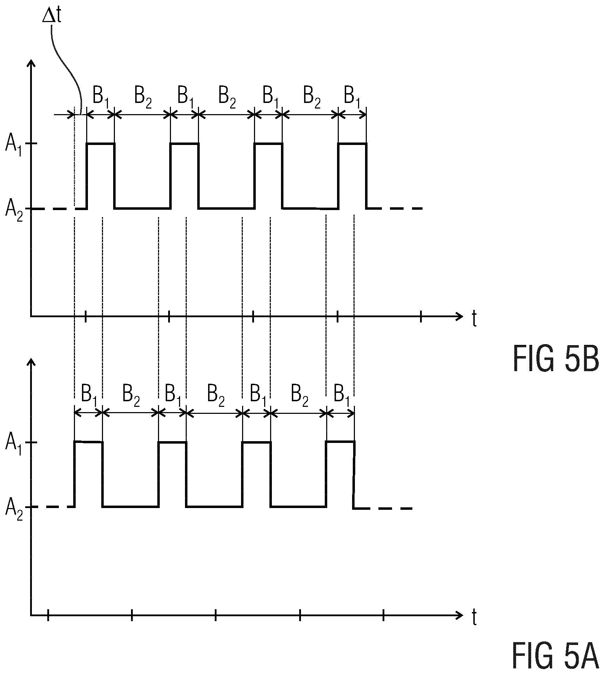

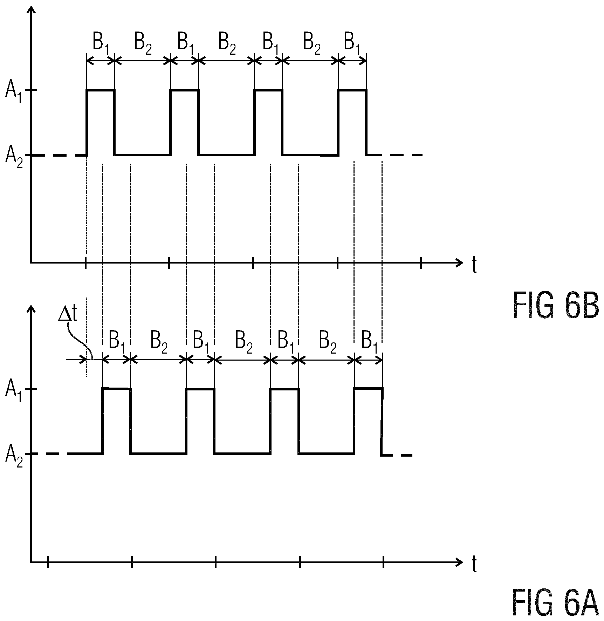

Werden bei den oben beschriebenen Ausführungsbeispielen zwei Sensoren verwendet (siehe z.B. Fig. 4), entweder als zwei Einzelsensoren oder als zwei Sensorköpfe in einem Gehäuse, so zeigt Fig. 4b beispielhaft einen Signalverlauf für eine Anordnung, bei der der eine Sensor das Kettenglied (A2/B2) und der andere zeitgleich den Zwischenraum zwischen zwei Kettenglieder (A1/B1) erfasst. Bei anderen Ausführungsbeispielen können die Sensoren derart angeordnet werden, dass ein Vorwärts-Rückwärtsfahren der Maschine anhand der Signale detektiert werden kann, vergleichbar mit einem Encoder eines Drehgebers. Hierzu sind die Sensoren so angeordnet, dass diese zumindest zeitweise gleichzeitig ein Kettenglied bzw. einen Zwischenraum erfassen, so dass die in Fig. 4b gezeigten Signalverläufe zueinander derart verschoben sind, die sich die Zwischenräume zwischen zwei Kettenglieder (A1/B1) an den Flanken überlappen. Fig. 5 zeigt die durch zwei Sensoren beim Vorwärtsfahren der Baumaschine erhaltenen Ausgangssignale, wobei Fig. 5a das Ausgangssignal eines ersten Sensors zeigt, der in Fahrtrichtung hinter einem zweiten Sensor angeordnet ist. Fig. 5b zeigt das durch den zweiten Sensor erhaltene Ausgangssignal. Die Signale B1 des ersten Sensors (Fig. 5a), die einen Zwischenraum darstellen, überlappen teilweise mit den entsprechenden Signalen B1 von dem zweiten Sensor (Fig. 5b), wie es durch den Versatz Δt dargestellt ist. Die Signale des zweiten Sensors sind gegenüber den Signalen des ersten Sensors um den Versatz Δt verzögert, woraus die Auswerteeinheit eine Vorwärtsbewegung der Maschine erkennt. Fig. 6 zeigt die durch die zwei Sensoren beim Rückwärtsfahren der Baumaschine erhaltenen Ausgangssignale, wobei Fig. 6a das Ausgangssignal des ersten Sensors und Fig. 6b das Ausgangssignal des zweiten Sensors zeigt, die wiederum um den Versatz Δt verschoben sind. In Fig. 6 sind die Signale des ersten Sensors sind gegenüber den Signalen des zweiten Sensors um den Versatz Δt verzögert, woraus die Auswerteeinheit eine Rückwärtsbewegung der Maschine erkennt.

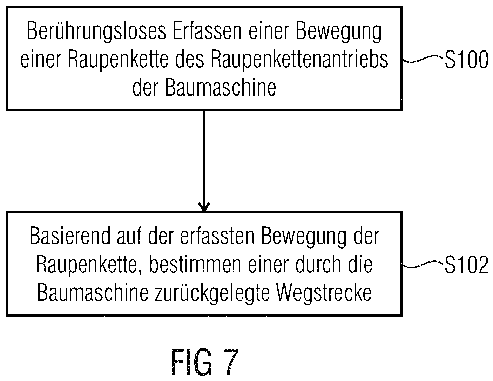

Fig. 7 zeigt ein Flussdiagramm des Verfahrens zur Wegstreckenmessung an einer Baumaschine. In einem ersten Schritt S100 wird die Bewegung einer Raupenkette des Raupenkettenantriebs der Baumaschine, beispielsweise eines Straßenfertigers, wie es anhand der Fig. 1 und anhand der Fig. 2 beschrieben wurde, berührungslos erfasst, so dass im Schritt S102 basierend auf der erfassten Bewegung der Raupenkette, die durch die Baumaschine zurückgelegte Wegstrecke bestimmt werden kann.

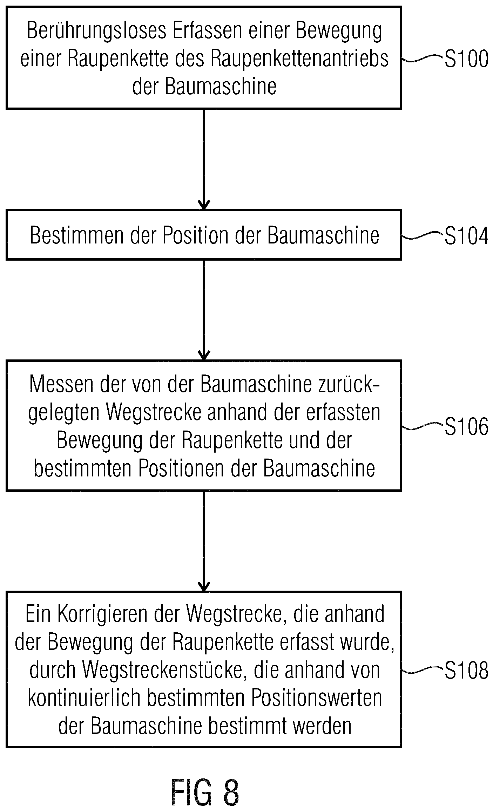

Die Fig. 8 zeigt ein Flussdiagramm gemäß einem Ausführungsbeispiel des erfindungsgemäßen Verfahrens. Ähnlich wie in Fig. 7 wird in dem Schritt S100 zunächst eine Bewegung der Raupenkette berührungslos erfasst. Zusätzlich wird gemäß dem dargestellten Ausführungsbeispiel im Schritt S104 die Position der Baumaschine erfasst, beispielsweise über eine Satellitennavigation oder Ähnliches. Im Schritt S106 wird die zurückgelegte Messstrecke anhand der erfassten Bewegung der Raupenkette und anhand der bestimmten Positionen der Baumaschine zu vorbestimmten Zeitpunkten gemessen. Gemäß dem beschriebenen Ausführungsbeispiel kann optional im Schritt S108 vorgesehen sein, die Wegstrecke, die anhand der Bewegung der Raupenkette erfasst wurde, basierend auf den Positionswerten der Baumaschine zu korrigieren.

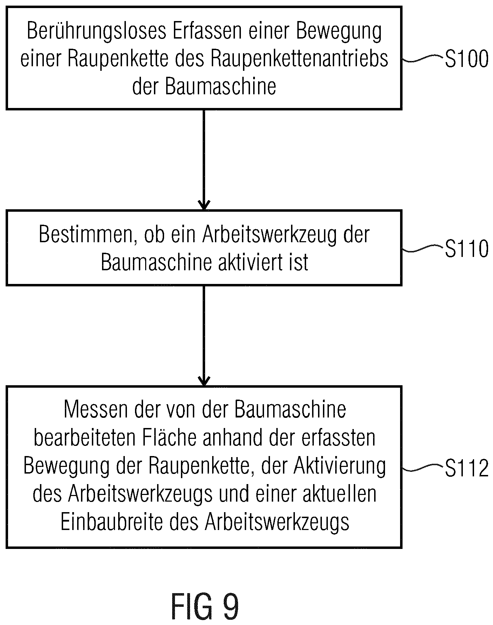

Fig. 9 zeigt ein Flussdiagramm, welches ein weiteres Ausführungsbeispiel des erfindungsgemäßen Verfahrens darstellt. Ähnlich den Ansätzen gemäß Fig. 7 und 8 wird auch in Fig. 9 im Schritt S100 zunächst die Bewegung der Raupenkette berührungslos erfasst. In einem nachfolgenden Schritt S110 wird bestimmt, ob ein Arbeitswerkzeug der Baumaschine aktiviert ist, beispielsweise durch Erfassen einer Vibration oder einer Beschleunigung desselben, so dass im Schritt S112 eine Messung der von der Baumaschine bearbeiteten Fläche durchgeführt werden kann, und zwar anhand der erfassten Bewegung der Raupenkette, der Aktivierung des Arbeitswerkzeugs und einer aktuellen Einbaubreite des Arbeitswerkzeugs, welches sich beispielsweise abhängig davon, welche Fläche zu bearbeiten ist, ändert. Beispielsweise kann bei einem Straßenfertiger ein schmaler Streifen asphaltiert werden, beispielsweise bei der Herstellung eines Radwegs, oder ein breiter Streifen, beispielsweise bei der Herstellung eines Belags für eine Spur einer Straße. Die entsprechende aktuelle Breite, mit der das Arbeitswerkzeug eingesetzt wird, fließt in die Berechnung der bearbeiteten Fläche mit ein. Bei dem in Fig. 9 gezeigten Ausführungsbeispiel kann zusätzlich vorgesehen sein, auch die Schritte des anhand der Fig. 8 gezeigten Ausführungsbeispiels mit einzubeziehen, nämlich die Korrektur der durch die berührungslose Erfassung der Bewegung der Raupenkette erfassten Wegstrecke.

Bei den oben beschriebenen Ausführungsbeispielen wurde erwähnt, dass ein Sensor auf ein hinteres Ende der Raupenkette gerichtet ist, und dass ggf. ein weiterer Sensor auf ein vorderes Ende der Raupenkette gerichtet ist. Die vorliegende Erfindung ist nicht hierauf beschränkt, vielmehr kann ein Sensor bzw. es können mehrere Sensoren an beliebigen Stellen entlang der Raupenkette angeordnet sein und auf diese gerichtet sein. Ein Sensor kann z.B. in einem Bereich zwischen den Achsen angeordnet sein und auf den am Boden aufliegenden Teil der Raupenkette oder auf den vom Boden beabstandeten Teil der Raupenkette gerichtet sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Straßenfertiger
- 102: Chassis
- 104: Einbaubohle
- 106: Verteilerschnecke
- 108: Materialbunker
- 110: Raupenkette
- 112: Kettenglied
- 114: Zwischenraum zwischen zwei benachbarten Kettengliedern
- 116: Untergrund
- 118: berührungsloser Sensor, bspw. Ultraschallsensor
- 118a: erster berührungsloser Sensorkopf, bspw. Ultraschallsensorkopf
- 118b: zweiter berührungsloser Sensorkopf, bspw. Ultraschallsensorkopf
- 118c: Sensorgehäuse
- 120: Berührungsloser Sensor, bspw. Ultraschallsensor
- 122: Auswerteeinheit
- 124: CAN-Bus
- 126: Schnittstelle
- 127: Steuerungsrechner
- 128: Bedien- und Anzeigevorrichtung
- 130: CAN-Bus
- 132: Positionsbestimmungseinrichtung
- 134: GNSS-Empfänger
- 136: Anschlussleitung des GNSS-Empfängers
- 138: Kommunikationseinrichtung
- 140: Beschleunigungssensor
- 142: Sensorerfassungsbereich des Sensors 118
- 142a, 142b: Sensorerfassungsbereiche der Sensorköpfe 118a, 118b
- 144: Sensorerfassungsbereich des Sensors 120
- 146a-c: Verkabelung
- 148: Rad

## Patentansprüche

1. Vorrichtung zur Wegstreckenmessung an einer Baumaschine (100) mit einem Raupenkettenantrieb, mit:
zumindest einem berührungslosen Sensor (118, 118a, 118b, 120) zur Anordnung an einem Chassis (102) der Baumaschine (100) derart, dass der berührungslose Sensor (118, 118a, 118b, 120) auf eine Raupenkette (110) des Raupenkettenantriebs der Baumaschine (100) gerichtet ist; und
einer Auswerteeinheit (122, 127), die mit dem berührungslosen Sensor (118, 118a, 118b, 120) verbunden ist und wirksam ist, um basierend auf den von dem berührungslosen Sensor (118, 118a, 118b, 120) empfangenen Signalen eine durch die Baumaschine (100) zurückgelegte Wegstrecke zu bestimmen,
**gekennzeichnet durch**
zumindest eine Positionsbestimmungseinrichtung (127, 132) zur Bestimmung der Position der Baumaschine (100), die konfiguriert ist, um die Position der Baumaschine (100) unter Verwendung von Signalen eines globalen Navigationssatellitensystems oder eines terrestrischen Systems zu bestimmen,
wobei die Auswerteeinheit (122, 127) konfiguriert ist, um in vorbestimmten Abständen die zurückgelegte Wegstrecke und/oder die der Wegstreckenberechnung zugrunde liegenden Parameter durch Positionsdaten von der Positionsbestimmungseinrichtung (127, 132) zu korrigieren, wobei die der Wegstreckenberechnung zugrunde liegenden Parameter eine voreingestellte Summe von Kettengliedlänge und Länge eines Zwischenraumes zwischen zwei Kettengliedern umfasst.

2. Vorrichtung gemäß Anspruch 1, bei der der berührungslose Sensor (118, 118a, 118b, 120) angeordnet ist, um bei einer Bewegung der Baumaschine (100) im Wechsel Kettenglieder (112) der Raupenkette (110) und Zwischenräume (114) zwischen den Kettengliedern (112) der Raupenkette (110) zu erfassen, und um Signale zu erzeugen, die die Erfassung eines Kettenglieds (112) und eines Zwischenraums (114) angeben.

3. Vorrichtung gemäß Anspruch 1 oder 2, bei der die Positionsbestimmungseinrichtung ein Teil einer Rechnereinheit (127) und/oder einer Bedien- und Anzeigeeinheit (128) der Baumaschine (100) ist, die wirksam mit der Auswerteeinheit (122) verbindbar ist.

4. Vorrichtung gemäß einem der Ansprüche 1 bis 3, mit zumindest einem an einem Arbeitswerkzeug (104) der Baumaschine (100) angeordneten Beschleunigungssensor (140) zur Erfassung eines Arbeitszustandes des Arbeitswerkzeugs (104).

5. Vorrichtung gemäß Anspruch 4, bei der die Auswerteeinheit (122, 127) konfiguriert ist, um die Information, ob sich die Baumaschine (100) bewegt oder nicht mit der Information von dem Beschleunigungssensor (140) und mit einer Information über eine aktuelle Einbaubreite eines Arbeitswerkzeugs (104) der Baumaschine (100) zu kombinieren, um eine durch die Baumaschine (100) bearbeitete Fläche zu bestimmen.

6. Vorrichtung gemäß einem der Ansprüche 1 bis 5, bei der der berührungslose Sensor (118) zumindest zwei Sensorköpfe (118a, 118b) in einem Gehäuse (118c) umfasst.

7. Vorrichtung gemäß einem der Ansprüche 1 bis 6, mit zumindest zwei berührungslosen Sensoren (118, 120), die auf einer Seite der Baumaschine (100) mit einem Abstand zueinander angeordnet sind, wobei ein erster berührungsloser Sensor (118) auf einen ersten Bereich der Raupenkette (110) und ein zweiter berührungsloser Sensor (120) auf einen zweiten Bereich der Raupenkette (110) gerichtet sind.

8. Vorrichtung gemäß einem der Ansprüche 1 bis 7, mit zumindest zwei berührungslosen Sensoren, wobei ein erster berührungsloser Sensor auf einer ersten Seite der Baumaschine (100) angeordnet ist, und wobei ein zweiter berührungsloser Sensor auf einer zweiten, der ersten Seite gegenüberliegenden Seite der Baumaschine (100) angeordnet ist,
wobei die Auswerteeinheit (122, 127) konfiguriert ist, um unter Verwendung der Signale von dem ersten berührungslosen Sensor und von dem zweiten berührungslosen Sensor zu bestimmen, ob die Baumaschine (100) geradeaus oder eine Kurve fährt.

9. Vorrichtung gemäß einem der Ansprüche 1 bis 8, mit:
einem Bussystem (124), das den berührungslosen Sensor (118, 118a, 118b, 120) und die Auswerteeinheit (122, 127) verbindet, und
einer Schnittstelle (126), die konfiguriert ist, um das Bussystem (124) mit einer Rechnereinheit (127) und/oder einer Bedien- und Anzeigeeinheit (128) und/oder einer Kommunikationseinrichtung (138) der Baumaschine (100) zu verbinden.

10. Baumaschine (100), mit:
einem Raupenkettenantrieb;
einem Chassis (102); und
einer Vorrichtung gemäß einem der Ansprüche 1 bis 9, die lösbar an der Baumaschine (100) angeordnet ist.

11. Verfahren zur Wegstreckenmessung einer Baumaschine (100) mit einem Raupenkettenantrieb, mit:
berührungsloses Erfassen (S100) einer Bewegung einer Raupenkette (110) des Raupenkettenantriebs der Baumaschine (100);
Bestimmen (S104) der Position der Baumaschine (100) unter Verwendung von Signalen eines globalen Navigationssatellitensystems oder eines terrestrischen Systems; und
Messen (S106) der von der Baumaschine (100) zurückgelegten Wegstrecke anhand der erfassten Bewegung der Raupenkette (110) und der bestimmten Positionen der Baumaschine (100),
wobei die zurückgelegte Wegstrecke und/oder die der Wegstreckenberechnung zugrunde liegenden Parameter in vorbestimmten Abständen durch Positionsdaten von der Positionsbestimmungseinrichtung (127, 132) korrigiert wird, wobei die der Wegstreckenberechnung zugrunde liegenden Parameter eine voreingestellte Summe von Kettengliedlänge und Länge eines Zwischenraumes zwischen zwei Kettengliedern umfasst.

12. Verfahren gemäß Anspruch 11, mit:
Bestimmen (S110), ob ein Arbeitswerkzeug (104) der Baumaschine (100) aktiviert ist, und
Messen (S112) der von der Baumaschine (100) bearbeiteten Fläche anhand der erfassten Bewegung der Raupenkette (110) und der Aktivierung des Arbeitswerkzeugs (104).

## Claims

1. A device for measuring a distance in a construction machine (100) having a caterpillar chain drive, comprising:
at least one contactless sensor (118, 118a, 118b, 120) for being arranged at a chassis (102) of the construction machine (100) such that the contactless sensor (118, 118a, 118b, 120) is directed to a caterpillar chain (110) of the caterpillar chain drive of the construction machine (100); and
an evaluating unit (122, 127) connected to the contactless sensor (118, 118a, 118b, 120) and operative to determine a distance covered by the construction machine (100) on the basis of the signals received from the contactless sensor (118, 118a, 118b, 120),
**characterized by**
at least one position determining means (127, 132) for determining the position of the construction machine (100), configured to determine the position of the construction machine (100) by using signals of a global navigation satellite system or a terrestrial system,
the evaluating unit (122, 127) being configured to correct, at predetermined intervals, the distance covered and/or the parameters on which the distance calculation is based, by means of position data from the position determining means (127, 132), wherein the parameters on which the distance calculation is based comprise a preset sum of the chain link length and the length of a gap between two chain links.

2. The device as claimed in claim 1, wherein the contactless sensor (118, 118a, 118b, 120) is arranged to alternatingly detect, when the construction machine (100) moves, chain links (112) of the caterpillar chain (110) and gaps (114) between the chain links (112) of the caterpillar chain (110) and to generate signals indicating detection of a chain link (112) and of a gap (114).

3. The device as claimed in claim 1 or 2, wherein the position determining means is part of a computing unit (127) and/or of an operating and display unit (128) of the construction machine (100), which may be operatively connected to the evaluating unit (122).

4. The device as claimed in any of claims 1 to 3, comprising at least one acceleration sensor (140), arranged at a work tool (104) of the construction machine (100), for detecting an operating state of the work tool (104).

5. The device as claimed in claim 4, wherein the evaluating unit (122, 127) is configured to combine the information as to whether the construction machine (100) is moving or not with the information from the acceleration sensor (140) and with information on a current mounting width of a work tool (104) of the construction machine (100) in order to determine an area processed by the construction machine (100).

6. The device as claimed in any of claims 1 to 5, wherein the contactless sensor (118) comprises at least two sensor heads (118a, 118b) within a casing (118c).

7. The device as claimed in any of claims 1 to 6, comprising at least two contactless sensors (118, 120) arranged on one side of the construction machine (100) with a mutual spacing, wherein a first contactless sensor (118) is directed to a first region of the caterpillar chain (110), and a second contactless sensor (120) is directed to a second region of the caterpillar chain (110).

8. The device as claimed in any of claims 1 to 7, comprising at least two contactless sensors, wherein a first contactless sensor is arranged on a first side of the construction machine (100), and wherein a second contactless sensor is arranged on a second side of the construction machine (100), which is opposite the first side,
wherein the evaluating unit (122, 127) is configured to determine, by using the signals from the first contactless sensor and from the second contactless sensor, whether the construction machine (100) is travelling straight ahead or is following a bend.

9. The device as claimed in any of claims 1 to 8, comprising:
a bus system (124) which connects the contactless sensor (118, 118a, 118b, 120) and the evaluating unit (122, 127), and
an interface (126) configured to connect the bus system (124) to a computing unit (127) and/or to an operating and display unit (128) and/or to communicating means (138) of the construction machine (100).

10. A construction machine (100) comprising:
a caterpillar chain drive;
a chassis (102); and
a device in accordance with any of claims 1 to 9, arranged detachably at the construction machine (100).

11. A method for measuring a distance in a construction machine (100) having a caterpillar chain drive, comprising:
detecting (S100) a movement of a caterpillar chain (110) of the caterpillar chain drive of the construction machine (100) in a contactless manner;
determining (S104) the position of the construction machine (100) by using signals of a global navigation satellite system or of a terrestrial system; and
measuring (S106) the distance covered by the construction machine (100) by using the detected movement of the caterpillar chain (110) and the determined positions of the construction machine (100),
wherein the distance covered and/or the parameters on which the distance calculation is based is corrected by means of position data from the position determining means (127, 132), wherein the parameters on which the distance calculation is based comprise a preset sum of the chain link length and the length of a gap between two chain links.

12. The method as claimed in claim 11, comprising:
determining (S110) whether a work tool (104) of the construction machine (100) is activated, and
measuring (S112) the area processed by the construction machine (100) by using the detected movement of the caterpillar chain (110) and the activation of the work tool (104).

## Revendications

1. Dispositif de mesure de la distance parcourue sur un engin de chantier (100) avec un entraînement à chenilles, avec:
au moins un capteur sans contact (118, 118a, 118b, 120) destiné à être disposé sur un châssis (102) de l'engin de chantier (100) de sorte que le capteur sans contact (118, 118a, 118b, 120) soit orienté vers une chenille (110) de l'entraînement à chenilles de l'engin de chantier (100); et
une unité d'évaluation (122, 127) qui est connectée au capteur sans contact (118, 118a, 118b, 120) et qui est opérationnelle pour déterminer, sur base des signaux reçus du capteur sans contact (118, 118a, 118b, 120), une distance parcourue par l'engin de chantier (100),
**caractérisé par**
au moins un moyen de détermination de position (127, 132) destiné à déterminer la position de l'engin de chantier (100) qui est configuré pour déterminer la position de l'engin de chantier (100) à l'aide de signaux d'un système global de navigation par satellite ou d'un système terrestre,
dans lequel l'unité d'évaluation (122, 127) est configurée pour corriger, à des intervalles prédéterminés, la distance parcourue et/ou les paramètres à la base du calcul de la distance par des données de position du moyen de détermination de position (127, 132), où les paramètres à la base du calcul de la distance comprennent une somme préréglée de la longueur de maillon de chaîne et de la longueur d'un espace intermédiaire entre deux maillons de chaîne.

2. Dispositif selon la revendication 1, dans lequel le capteur sans contact (118, 118a, 118b, 120) est disposé pour capter, lors d'un déplacement de l'engin de chantier (100), en alternance des maillons de chaîne (112) de la chenille (110) et des espaces intermédiaires (114) entre les maillons de chaîne (112) de la chenille (110), et pour générer des signaux qui indiquent la détection d'un maillon de chaîne (112) et d'un espace intermédiaire (114).

3. Dispositif selon la revendication 1 ou 2, dans lequel le moyen de détermination de position fait partie d'une unité de calcul (127) et/ou d'une unité de commande et d'affichage (128) de l'engin de chantier (100) qui peut être connecté en fonctionnement à l'unité d'évaluation (122).

4. Dispositif selon l'une des revendications 1 à 3, avec au moins un capteur d'accélération (140) disposé sur un outil de travail (104) de l'engin de chantier (100) pour détecter un état de travail de l'outil de travail (104).

5. Dispositif selon la revendication 4, dans lequel l'unité d'évaluation (122, 127) est configurée pour combiner l'information de si l'engin de chantier (100) se déplace ou non avec une information du capteur d'accélération (140) et avec une information sur une largeur d'incorporation actuelle d'un outil de travail (104) de l'engin de chantier (100) pour déterminer une surface travaillée par l'engin de chantier (100).

6. Dispositif selon l'une des revendications 1 à 5, dans lequel le capteur sans contact (118) comporte au moins deux têtes de capteur (118a, 118b) dans un boîtier (118c).

7. Dispositif selon l'une des revendications 1 à 6, avec au moins deux capteurs sans contact (118, 120) qui sont disposés d'un côté de l'engin de chantier (100) avec une distance entre eux, un premier capteur sans contact (118) étant orienté vers une première zone de la chenille (110) et un deuxième capteur sans contact (120) étant orienté vers une deuxième zone de la chenille (110).

8. Dispositif selon l'une des revendications 1 à 7, avec au moins deux capteurs sans contact, un premier capteur sans contact étant disposé d'un premier côté de l'engin de chantier (100), et un deuxième capteur sans contact étant disposé d'un deuxième côté, opposé au premier côté, de l'engin de chantier (100),
dans lequel l'unité d'évaluation (122, 127) est configurée pour déterminer, à l'aide des signaux du premier capteur sans contact et du deuxième capteur sans contact, si la engin de chantier (100) roule tout droit ou en courbe.

9. Dispositif selon l'une des revendications 1 à 8, avec:
un système de bus (124) qui connecte le capteur sans contact (118, 118a, 118b, 120) et l'unité d'évaluation (122, 127), et
une interface (126) qui est configurée pour connecter le système de bus (124) à une unité de calcul (127) et/ou une unité de commande et d'affichage (128) et/ou un moyen de communication (138) de l'engin de chantier (100).

10. Engin de chantier (100), avec:
un entraînement à chenilles;
un châssis (102); et
un dispositif selon l'une des revendications 1 à 9 qui est disposé de manière amovible sur l'engin de chantier (100).

11. Procédé de mesure de distance d'un engin de chantier (100) avec un entraînement à chenilles, avec le fait de:
détecter sans contact (S 100) un déplacement d'une chenille (110) de l'entraînement à chenilles de l'engin de chantier (100);
déterminer (S104) la position de l'engin de chantier (100) à l'aide de signaux d'un système global de navigation par satellite ou d'un système terrestre; et
mesurer (S106) la distance parcourue par l'engin de chantier (100) sur base du déplacement détecté de la chenille (110) et des positions déterminées de l'engin de chantier (100),
dans lequel la distance parcourue et/ou les paramètres à la base du calcul de la distance est corrigée à des intervalles prédéterminés par des données de position du moyen de détermination de position (127, 132), où les paramètres à la base du calcul de distance comprennent une somme préréglée de la longueur de maillon de chaîne et de la longueur d'un espace intermédiaire entre deux maillons de chaîne.

12. Procédé selon la revendication 11, avec le fait de:
déterminer (S110) si un outil de travail (104) de l'engin de chantier (100) est activé, et
mesurer (S112) la surface (100) travaillée par l'engin de chantier sur base du déplacement détecté de la chenille (110) et de l'activation de l'outil de travail (104).
